(19) Europäisches Patentamt
European Patent Office
Office européen des brevets

(11) **EP 4 219 429 A1**

(12) **EUROPEAN PATENT APPLICATION**
published in accordance with Art. 153(4) EPC

(43) Date of publication:
**02.08.2023 Bulletin 2023/31**

(21) Application number: **21872335.1**

(22) Date of filing: **16.09.2021**

(51) International Patent Classification (IPC):
***C04B 35/80*** (2006.01)   ***D06M 11/45*** (2006.01)

(52) Cooperative Patent Classification (CPC):
**C04B 35/80; D06M 11/45; D06M 11/71**

(86) International application number:
**PCT/JP2021/034194**

(87) International publication number:
**WO 2022/065205 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.09.2020 JP 2020158278**

(71) Applicant: **Tosoh Corporation**
**Yamaguchi 746-8501 (JP)**

(72) Inventors:
• **HIRATAKA,Yo**
**Ayase-shi Kanagawa 252-1123 (JP)**
• **NAWATA, Yushi**
**Ayase-shi Kanagawa 252-1123 (JP)**
• **OHTA, Ikuya**
**Ayase-shi Kanagawa 252-1123 (JP)**
• **YAMASHITA, Isao**
**Ayase-shi Kanagawa 252-1123 (JP)**

(74) Representative: **Hoffmann Eitle**
**Patent- und Rechtsanwälte PartmbB**
**Arabellastraße 30**
**81925 München (DE)**

(54) **CERAMIC CONTINUOUS FIBERS HAVING COATING LAYER AND METHOD FOR PRODUCING SAME, AND CERAMIC MATRIX COMPOSITE MATERIAL AND METHOD FOR PRODUCING SAME**

(57)    Provided are a cover-layer-including ceramic continuous fiber suitable for producing a ceramic matrix composite material that can have improved damage tolerance and a ceramic matrix composite material formed from the cover-layer-including ceramic continuous fiber.

The cover-layer-including ceramic continuous fiber includes a ceramic continuous fiber and a cover layer formed of an inorganic acid salt and disposed on the surface of the ceramic continuous fiber, wherein the thickness variation coefficient of the cover layer is 80% or less.

FIG. 2

EP 4 219 429 A1

**Description**

Technical Field

The present invention relates to a cover-layer-including ceramic continuous fiber, a method for producing the cover-layer-including ceramic continuous fiber, a ceramic matrix composite material and a method for producing the ceramic matrix composite material.

Background Art

The ceramic matrix composite materials provided by combining a ceramic continuous fiber and a ceramic matrix (in other words, composite materials including a ceramic continuous fiber and a ceramic matrix; hereafter, also referred to as "CMCs") have high tolerance to destruction of the whole materials due to spreading of cracks (damage tolerance), compared with ordinary ceramic. For this reason, CMCs have been studied as substituent materials for heat-resistant metals such as Ni-based alloys.
Furthermore, alumina and mullite-based oxide have high chemical stability. For this reason, CMCs that are provided by combining ceramic continuous fibers of alumina or mullite-based oxide with a ceramic matrix are considered promising particularly in applications as members for aviation jet engines (for example, Non Patent Literature 1).
Selective separation or breakage at the interface between the ceramic continuous fiber and the ceramic matrix suppresses spreading of cracks in CMCs. Thus, firm adhesion between the ceramic continuous fiber and the ceramic matrix hampers suppression of spreading of cracks, which tends to result in destruction of the materials (CMCs).
In order to prevent firm adhesion between the ceramic continuous fiber and the ceramic matrix, using compounds that promote breakage or the like at the interface to cover the surface of the ceramic continuous fiber has been studied. In particular, cover layers formed of inorganic acid salts such as rare-earth phosphates have low reactivity with alumina and mullite-based oxide and are stable even at high temperatures. For this reason, inorganic acid salts for cover layers on the surfaces of ceramic continuous fibers have been studied (for example, Non Patent Literatures 2 to 4).

Citation List

Non Patent Literature

NPL 1: J. AerospaceLab, Issue3, (2011) 1-12.
NPL 2: J. Am. Ceram. Soc. 80 12 (1997) 2987-96
NPL 3: J. Am. Ceram. Soc. 84 12 (2001) 2783-92
NPL 4: Materials Science and Engineering A244 (1998) 91-96

Summary of Invention

Technical Problem

In general, a CMC is produced using a fiber that is a mass of several hundreds or more of fibers (hereafter, also referred to as "fiber bundle") as a ceramic continuous fiber. In the method described in NPL 2, such ceramic continuous fibers are impregnated with a slurry so as to be covered with an inorganic acid salt, so that the ceramic continuous fibers tend to aggregate and furthermore the film thicknesses (specifically, the thicknesses of the cover layers) are difficult to control. For this reason, the resultant CMC has low strength. In the method in NPL 3 using the liquid-phase method, complete coverage of the ceramic continuous fiber with the covering substance involves a large number of steps. In addition, the existing liquid-phase method in which unhomogeneous nucleus generation or nucleus growth occurs does not provide cover layers having a uniform thickness. For this reason, the resultant CMC has low strength, which has been problematic. Furthermore, for the CVD method described in NPL 4, the inner portions of the fiber bundle tend not to be covered; in particular, continuous fibers in the inner portions tend not to be covered. For this reason, also for this method, the resultant CMC has low strength, which has been problematic.
Under such circumstances, the present invention has been made; a main object is to provide a cover-layer-including ceramic continuous fiber suitable for producing a ceramic matrix composite material that can have improved damage tolerance and a ceramic matrix composite material formed from the cover-layer-including ceramic continuous fiber.

Solution to Problem

In order to achieve the object, the inventors of the present invention performed thorough studies. As a result, they have found the following: a thin film is formed on a ceramic continuous fiber that is subjected to growth of a cover film by the liquid-phase method, to promote generation of homogeneous nuclei and growth of nuclei in the liquid-phase method, to form a homogeneous film, so that the CMC can have improved damage tolerance. Thus, they have accomplished the present invention.

Specifically, the present invention is described in CLAIMS and the gist of the present invention is to provide, as described below, cover-layer-including ceramic continuous fibers according to [1] to [8], a ceramic matrix composite material according to [9], methods for producing a cover-layer-including ceramic continuous fiber according to [10] to [13] and a method for producing a ceramic matrix composite material according to [14].

[1] A cover-layer-including ceramic continuous fiber comprising a ceramic continuous fiber and a cover layer formed of an inorganic acid salt and disposed on a surface of the ceramic continuous fiber, wherein the cover layer has a thickness variation coefficient of 80% or less.

[2] The cover-layer-including ceramic continuous fiber according to [1], wherein the cover layer formed of the inorganic acid salt provides a coverage of 90% or more.

[3] The cover-layer-including ceramic continuous fiber according to [1] or [2], wherein the cover layer has a thickness of more than 50 nm.

[4] The cover-layer-including ceramic continuous fiber according to any one of [1] to [3], wherein, on the surface of the ceramic continuous fiber, the cover layer formed of the inorganic acid salt and having a thickness of 1 um or less is disposed.

[5] The cover-layer-including ceramic continuous fiber according to any one of [1] to [4], wherein the inorganic acid salt is a phosphate.

[6] The cover-layer-including ceramic continuous fiber according to any one of [1] to [5], wherein the inorganic acid salt is one or more selected from the group consisting of lanthanum phosphate, cerium phosphate, neodymium phosphate and samarium phosphate.

[7] The cover-layer-including ceramic continuous fiber according to any one of [1] to [6], wherein the inorganic acid salt is lanthanum phosphate.

[8] The cover-layer-including ceramic continuous fiber according to any one of [1] to [7], wherein the ceramic continuous fiber is at least one of a mullite continuous fiber or an alumina continuous fiber.

[9] A ceramic matrix composite material comprising the cover-layer-including ceramic continuous fiber according to any one of [1] to [8].

[10] A method for producing a cover-layer-including ceramic continuous fiber, the method being a production method for the cover-layer-including ceramic continuous fiber according to any one of [1] to [8], the production method comprising a first immersion step of immersing a ceramic continuous fiber in a solution containing a coupling material, a drying step of drying the ceramic continuous fiber at a temperature of 70°C or more, a second immersion step of immersing the ceramic continuous fiber in a solution containing a metallic salt, a first heat-treatment step of heat-treating the ceramic continuous fiber, a third immersion step of immersing the ceramic continuous fiber in a solution containing a metallic salt, an organic acid and an inorganic acid, a fourth immersion step of immersing the ceramic continuous fiber in water at 50°C to 100°C and a second heat-treatment step of heat-treating the ceramic continuous fiber.

[11] The method for producing a cover-layer-including ceramic continuous fiber according to [10], wherein the coupling material is at least one of a phosphonic acid derivative or an alkoxysilane derivative.

[12] The method for producing a cover-layer-including ceramic continuous fiber according to [10] or [11], wherein the metallic salt in the second immersion step is a nitrate containing one or more selected from the group consisting of lanthanum (La), cerium (Ce), neodymium (Nd), samarium (Sm), europium (Eu), gadolinium (Gd), erbium (Er), ytterbium (Yb), yttrium (Y) and aluminum (Al).

[13] The method for producing a cover-layer-including ceramic continuous fiber according to any one of [10] to [12], wherein, in the third immersion step, the metallic salt in the solution containing the metallic salt, the organic acid and the inorganic acid is a metallic salt that is the same as the metallic salt used in the second immersion step.

[14] A method for producing a ceramic matrix composite material, the method comprising a combination step of combining the cover-layer-including ceramic continuous fiber according to any one of [1] to [8] and a ceramic matrix.

Brief Description of Drawings

[Fig. 1] Fig. 1 are graphs of analysis results of phosphorus (Fig. 1(a)) and lanthanum (Fig. 1(b)) in the mullite continuous fiber of Example A1 including a thin film (cover layer) of monazite-type lanthanum phosphate (hereafter, also referred to as "$LaPO_4$") and a standard reference material (described later) of $LaPO_4$ captured by X-ray photoelectron spectroscopy (hereafter, also referred to as "ESCA").

[Fig. 2] Fig. 2 is a cross-sectional scanning electron microscope (hereafter, also referred to as "SEM") image of the monazite-type lanthanum-phosphate-covered mullite continuous fiber of Example A1.

[Fig. 3] Fig. 3(a) is a surface SEM image of the $LaPO_4$-covered mullite continuous fiber of Example A1. Figs. 3(b) to (e) are images captured by energy-dispersive X-ray method (hereafter, also referred to as "EDS") and indicating distributions of aluminum (Fig. 3(b)), silicon (Fig. 3(c)), lanthanum (Fig. 3(d)) and phosphorus (Fig. 3(e)) in the broken line region in the $LaPO_4$-covered mullite continuous fiber in Fig. 3(a).

[Fig. 4] Fig. 4 is a cross-sectional SEM image of the $LaPO_4$-covered mullite continuous fiber of Example A2.

[Fig. 5] Fig. 5 is a surface SEM image of the $LaPO_4$-covered mullite continuous fiber of Example A2.

[Fig. 6] Fig. 6 is a cross-sectional SEM image of the $LaPO_4$-covered mullite continuous fiber of Comparative Example A1.

[Fig. 7] Fig. 7 is a surface SEM image of the $LaPO_4$-covered mullite continuous fiber of Comparative Example A1.

[Fig. 8] Fig. 8 is a cross-sectional SEM image of the $LaPO_4$-covered mullite continuous fiber of Comparative Example A2.

[Fig. 9] Fig. 9 is a surface SEM image of the $LaPO_4$-covered mullite continuous fiber of Comparative Example A2.

Description of Embodiments

Hereinafter, embodiments according to the present invention will be described in detail. However, the present invention is not limited to the following embodiments. Note that, in this Description, ranges described as "lower-limit value to upper-limit value" include these values and mean the lower-limit value or more and the upper-limit value or less.

In this Description, "ceramic fiber" is spun polycrystalline ceramic or thread-shaped polycrystalline ceramic. Ceramic fibers are classified as, on the basis of the fiber lengths, "ceramic short fibers" or "ceramic continuous fibers". In this Description, the ceramic short fibers mean ceramic fibers having fiber lengths of less than 500 $\mu$m; "ceramic continuous fibers" mean ceramic fibers other than ceramic short fibers (ceramic fibers having fiber lengths of 500 um or more). Such a ceramic fiber may be a single independent fiber, may be a fiber that is a combination of a plurality of fibers or may be a fiber bundle. "Ceramic fiber cloth" is a woven fabric of ceramic fibers, in particular, a woven fabric of ceramic continuous fibers.

In this Description, "cover-layer-including ceramic continuous fiber" and "covered ceramic continuous fiber" are interchangeably used.

[Cover-layer-including ceramic continuous fiber]

This embodiment is a cover-layer-including ceramic continuous fiber comprising a ceramic continuous fiber and a cover layer formed of an inorganic acid salt and disposed on the surface of the ceramic continuous fiber, wherein the cover layer has a thickness variation coefficient of 80% or less.

The ceramic continuous fiber in the covered ceramic continuous fiber according to this embodiment, in other words, the ceramic continuous fiber (parent phase) constituting the cover-layer-including ceramic continuous fiber according to this embodiment is not particularly limited as long as it is a continuous fiber formed of ceramic. The ceramic continuous fiber is preferably one or more selected from the group consisting of a silicon carbide continuous fiber, an alumina continuous fiber and a mullite continuous fiber, more preferably at least one of an alumina continuous fiber or a mullite continuous fiber. The ceramic continuous fiber is preferably a continuous fiber formed of aluminum oxide, more preferably a continuous fiber containing alumina. From the viewpoint of having high heat resistance, the ceramic continuous fiber is preferably a mullite continuous fiber. On the other hand, from the viewpoint of providing a CMC having high tensile strength, the ceramic continuous fiber is preferably an alumina fiber. Note that the mullite continuous fiber may be a continuous fiber formed of mullite and alumina.

The ceramic continuous fiber in the covered ceramic continuous fiber according to this embodiment is preferably in at least one of a fiber bundle state or a knitted fiber bundle state, more preferably a ceramic fiber cloth, preferably a ceramic continuous fiber in a knitted fiber bundle state (a ceramic fiber cloth).

The covered ceramic continuous fiber according to this embodiment comprises, in the surface, a cover layer of an inorganic acid salt. The inorganic acid salt in the cover layer, in other words, the inorganic acid salt forming the cover layer is not particularly limited as long as it is an inorganic acid salt containing a metal. The inorganic acid salt is preferably a metallic salt or compound that does not react with the ceramic continuous fiber and the ceramic matrix, preferably a salt containing one or more selected from the group consisting of lanthanum (La), cerium (Ce), neodymium (Nd), samarium (Sm), europium (Eu), gadolinium (Gd), erbium (Er), ytterbium (Yb), yttrium (Y) and aluminum (Al), preferably one or more selected from the group consisting of lanthanum, cerium, neodymium, gadolinium, samarium and yttrium, more preferably a salt containing lanthanum. The salt of such a metal may be one or more selected from the group consisting of phosphate, silicate, nitrate, carbonate and sulfate and is preferably at least one of phosphate or silicate, more preferably phosphate. Specifically, the inorganic acid salt may be at least one of (1) a phosphate such as $LaPO_4$, $La(PO_3)_3$, $LaP_5O_{14}$, $CePO_4$, $Ce(PO_3)_3$, $CeP_5O_{14}$, $NdPO_4$, $Nd(PO_3)_3$, $NdP_5O_{14}$, $SmPO_4$, $Sm(PO_3)_3$, $SmP_5O_{14}$, $EuPO_4$, $Eu(PO_3)_3$, $EuP_5O_{14}$, $GdPO_4$, $Gd(PO_3)_3$, $GdP_5O_{14}$, $ErPO_4$, $Er(PO_3)_3$, $ErP_5O_{14}$, $YbPO_4$, $Yb(PO_3)_3$, $YbP_5O_{14}$, $YPO_4$, $Y(PO_3)_3$, $YP_5O_{14}$, $AlPO_4$, $Al(PO_3)_3$ or $AlP_3O_{10}$, (2) a silicate such as lanthanum silicate, cerium silicate, neodymium silicate, samarium silicate, europium silicate, gadolinium silicate, erbium silicate, ytterbium silicate, yttrium silicate or aluminum silicate, (3) a nitrate such as lanthanum nitrate, cerium nitrate, neodymium nitrate, samarium nitrate, europium nitrate, gadolinium nitrate, erbium nitrate, ytterbium nitrate, yttrium nitrate or aluminum nitrate, (4) a sulfate such as lanthanum sulfate, cerium sulfate, neodymium sulfate, samarium sulfate, europium sulfate, gadolinium sulfate, erbium sulfate, ytterbium sulfate, yttrium sulfate or aluminum sulfate or (5) a carbonate such as lanthanum carbonate, cerium carbonate, neodymium carbonate, samarium carbonate, europium carbonate, gadolinium carbonate, erbium carbonate, ytterbium carbonate, yttrium carbonate or aluminum carbonate.

The inorganic acid salt is more preferably one or more selected from the group consisting of lanthanum phosphate ($LaPO_4$), cerium phosphate ($CePO_4$), neodymium phosphate ($NdPO_4$), samarium phosphate ($SmPO_4$), europium phosphate ($EuPO_4$), gadolinium phosphate ($GdPO_4$), erbium phosphate ($ErPO_4$), ytterbium phosphate ($YbPO_4$), yttrium phosphate ($YPO_4$), aluminum phosphate ($AlPO_4$), lanthanum silicate, cerium silicate, neodymium silicate, samarium silicate, europium silicate, gadolinium silicate, erbium silicate, ytterbium silicate, yttrium silicate and aluminum silicate, more preferably one or more selected from the group consisting of lanthanum phosphate, cerium phosphate, neodymium phosphate, samarium phosphate, gadolinium phosphate, ytterbium phosphate, yttrium phosphate and aluminum phosphate, particularly preferably one or more selected from the group consisting of lanthanum phosphate, cerium phosphate, neodymium phosphate, samarium phosphate and gadolinium phosphate.

The inorganic acid salt is particularly preferably one or more selected from the group consisting of lanthanum phosphate, cerium phosphate, neodymium phosphate and samarium phosphate or one or more selected from the group consisting of lanthanum phosphate, cerium phosphate and samarium phosphate.

The cover layer of the inorganic acid salt covers at least a portion of the surface of the ceramic continuous fiber and preferably covers the whole surface of the ceramic continuous fiber. On the other hand, portions of the surfaces of ceramic continuous fibers constituting the covered ceramic continuous fiber according to this embodiment, the portions being in contact with each other, do not necessarily include cover layers.

In the cover-layer-including ceramic continuous fiber according to this embodiment, the ratio of the area covered with the cover substance (namely, the inorganic acid salt) to the total surface area of the ceramic continuous fiber (hereafter, also referred to as "coverage") is preferably 90% or more, more preferably 95% to 100%. When the coverage is 90% or more, the covered ceramic continuous fiber according to this embodiment provides a CMC in which firm adhesion between the covered ceramic continuous fiber and the ceramic matrix is further suppressed. The coverage of 100% corresponds to a state in which the cover substance (inorganic acid salt) covers the whole surface of the ceramic continuous fiber, in other words, the whole surface of the continuous fiber is covered with the cover layer. When the coverage is 30% or less, the cover layer is present, like, what is called, the sea-island structure, unevenly over the surface of the ceramic continuous fiber. As a result, the thickness variation coefficient (described later) of the cover layer tends to exceed 100%. Note that the total surface area of the ceramic continuous fiber is the surface area of the continuous fiber and does not include portions of contact between the surfaces of the constituent fibers, the portions not being exposed as the continuous fiber.

The coverage can be calculated, using a surface SEM image of the covered ceramic continuous fiber, by the following Formula (1).

$$\theta = 100 \times S/Sf \qquad (1)$$

[$\theta$ is coverage (%), Sf is the measured area ($m^2$) of the surface of the ceramic continuous fiber and S is the area ($m^2$) of the cover layer within the measured area determined by binarization]

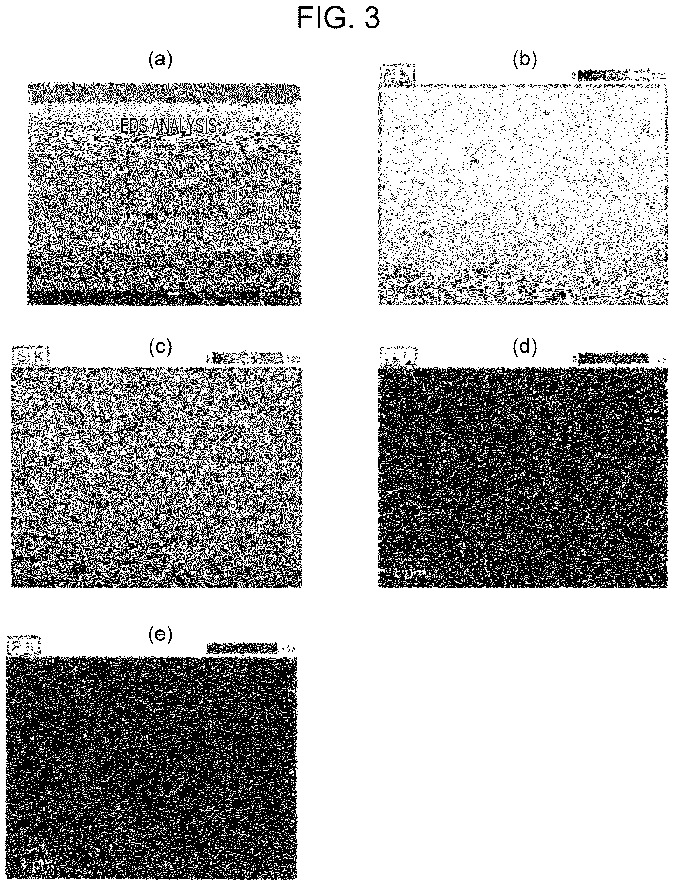

As illustrated in Fig. 3(a), the surface SEM image used for measuring the coverage is a SEM observation image of a fiber longitudinal portion of the covered ceramic continuous fiber, the image being an observation image captured using an ordinary SEM (for example, JSM-7600F, manufactured by JEOL Ltd.). The SEM observation conditions may be as follows.

Accelerating voltage: 5 kV
Observation magnification: 5000x

Image analysis using an ordinary image analysis software (for example, ImageJ, manufactured by The National Institutes of Health) can be performed to determine, from the resultant surface SEM image, Sf and S, which can be used to determine the coverage.

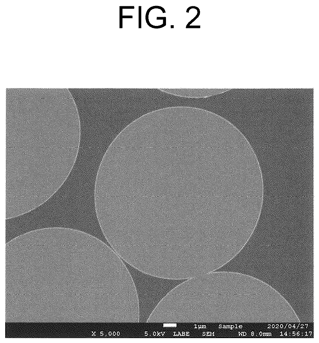

Alternatively, the surface SEM image can be binarized and, from the binarized surface SEM image, the area (S) of the cover layer in the region can be determined. The binarization can be performed using an ordinary image processing software (for example, ImageJ, manufactured by The National Institutes of Health) and, as needed, the threshold can be appropriately adjusted in the image processing so as to differentiate between the ceramic continuous fiber and the cover layer. For example, as illustrated in Fig. 2, in the case where the surface SEM image itself provides differentiation between the ceramic continuous fiber and the cover layer, binarization and adjustment of the threshold are not necessarily performed. In a case where the presence or absence of the cover cannot be determined due to, for example, a high coverage, the presence or absence of the cover may be determined using a cross-sectional SEM image of the ceramic continuous fiber.

The cover-layer-including ceramic continuous fiber according to this embodiment preferably comprises, in the surface, a cover layer formed of an inorganic acid salt and having a thickness of 1 um or less, in other words, the cover layer preferably has a thickness of 1 um or less. When the cover layer has a thickness of 1 um or less, aggregation of ceramic continuous fibers can be prevented. The cover layer more preferably has a thickness of 0.7 um or less, particularly preferably 0.5 um or less, 0.4 um or less, 0.3 um or less or 0.2 um or less. The lower limit of the thickness of the cover layer is not particularly limited; the cover layer can have a thickness of 1 nm or more, 10 nm or more, more than 50 nm, 100 nm or more or 150 nm or more.

In the covered ceramic continuous fiber according to this embodiment, the cover layer has a thickness variation coefficient of 80% or less; in other words, in the covered ceramic continuous fiber, the cover layer has a thickness variation coefficient of 80% or less. The cover layer has a thickness variation coefficient of preferably 50% or less, more preferably 30% or less. A thickness variation coefficient of 80% or less means that fibers within the fiber bundle, in other words, ceramic fibers constituting the covered ceramic continuous fiber according to this embodiment are covered with cover layers that are smooth and have a uniform thickness. In this case, the cover layers sufficiently function as interfacial layers and the continuous fiber provides a CMC in which firm adhesion between the ceramic matrix and the fiber is suppressed. This results in an increased strength of the CMC provided by combination of these. When the thickness variation coefficient is more than 80%, the cover layers are present in a non-uniform state on the ceramic fibers and do not sufficiently function as the interfacial layers between the ceramic continuous fiber and the ceramic matrix. This results in a CMC having a decreased strength. Such a cover layer preferably has a low thickness variation coefficient, for example, 0% or more, more than 0%, 5% or more, 10% or more or 15% or more. Note that, in the covered ceramic continuous fiber of this example, there is no direct correlation between the thickness and its variation coefficient of the cover layer; for example, even when a covered ceramic continuous fiber comprises a cover layer having a thickness of 0.1 um or more or 0.2 um or more, it can be provided as having a low thickness variation coefficient. On the other hand, when the cover layer has a thickness of more than 50 nm or 80 nm or more, the coverage tends to become high and the thickness variation coefficient tends to become low.

In this embodiment, the thickness of the cover layer and the thickness variation coefficient of the cover layer can be measured using a cross-sectional SEM image of the ceramic continuous fiber.

The cross-sectional SEM image used for the measurement is, as illustrated in Fig. 2, a SEM observation image of a cross-section of the covered ceramic continuous fiber, in other words, a section perpendicular to the longitudinal direction of the fiber and is measured under conditions similar to those of the above-described surface SEM image. Clear differentiation between the ceramic continuous fiber and the cover layer of the inorganic acid salt can be achieved in the cross-sectional SEM image and the thickness of the cover layer can be accurately measured; however, as needed, the cross-sectional SEM image may be binarized to measure the thickness of the cover layer.

The thickness of the cover layer means the thickness of the inorganic acid salt (cover layer) measured from a cross-sectional SEM image. In this embodiment, the thickness of the cover layer is the average ($t_{ave}$) of the thicknesses (t) of the cover layer measured at 50 points, preferably at 50 or more points, more preferably at 50 to 60 points in the cross-sectional SEM image. For the thicknesses (t) of the cover layer, measurement points are set at 8 to 16 points that are equally apart from each other on the circumference of a single ceramic continuous fiber and the thicknesses [nm] of the cover layer at the measurement points are measured. For the thicknesses (t) of the cover layer at the measurement points, the above-described image analysis software may be used. The obtained thicknesses can be averaged to determine the thickness ($t_{ave}$) of the cover layer in this embodiment. This measurement may be performed for a plurality of ceramic continuous fibers.

In this embodiment, "variation coefficient" is a value provided by dividing standard deviation by average and "thickness variation coefficient" is the ratio [%] of the standard deviation [nm] of the thicknesses of the cover layer to the average ($t_{ave}$) [nm] of the thicknesses of the cover layer. The thickness variation coefficient of the cover layer can be calculated, using the thicknesses of the cover layer in a cross-sectional SEM image measured by the above-described method, by Formula (2).

$$CV = 100 \times \sigma/t_{ave} \quad (2)$$

In Formula (2), CV is the thickness variation coefficient [%] and $\sigma$ is the standard deviation [nm] of the thicknesses of the cover layer, the standard deviation being determined from the thicknesses (t) at all the measurement points of the cover layer. $t_{ave}$ is the thickness of the cover layer and is the average [nm] of the thicknesses (t) at all the measurement points of the cover layer.

The cover-layer-including ceramic continuous fiber according to this embodiment can be used as the fiber of fiber-reinforced composite materials including ceramic fiber-reinforced ceramic.

[Ceramic matrix composite material (CMC)]

The ceramic matrix composite material according to an embodiment of the present invention (hereafter, also referred to as "CMC according to this embodiment") comprises the above-described cover-layer-including ceramic continuous fiber and is preferably a material provided by combining the above-described cover-layer-including ceramic continuous fiber and a ceramic matrix. In other words, the CMC according to this embodiment is a ceramic matrix composite material constituted by the above-described cover-layer-including ceramic continuous fiber and the ceramic matrix or is a ceramic fiber-reinforced ceramic formed of a ceramic matrix including the above-described cover-layer-including ceramic continuous fiber.

The ceramic matrix constituting the CMC according to this embodiment is at least one of an oxide ceramic such as alumina, mullite, zirconia or silica or a non-oxide ceramic such as silicon carbide, preferably an oxide ceramic such as alumina, mullite, zirconia or silica, more preferably one or more selected from the group consisting of alumina, mullite, zirconia and silica, still more preferably one or more selected from the group consisting of alumina, mullite and silica, yet more preferably at least one of alumina or mullite, still yet more preferably alumina.

The ceramic matrix and the ceramic continuous fiber are preferably formed of the same material. For example, the CMC according to this embodiment is preferably a CMC formed of an alumina continuous fiber and an alumina matrix, a CMC formed of a mullite continuous fiber and a mullite matrix or a CMC formed of a silicon carbide continuous fiber and a silicon carbide matrix. On the other hand, in the CMC according to this embodiment, the ceramic matrix and the ceramic continuous fiber may be different from each other in main constituent composition.

The density of the CMC according to this embodiment varies depending on, for example, the type of the ceramic matrix, but is, for example, 2.50 g/cm$^3$ or more or 2.70 g/cm$^3$ or more, or 3.20 g/cm$^3$ or less or 3.00 g/cm$^3$ or less.

The CMC according to this embodiment has a fiber volume ratio of 30% or more, preferably 30% to 60%, more preferably 35% to 45%, still more preferably 36% to 43%.

"Fiber volume ratio" is the volume ratio [vol%] of the ceramic continuous fiber in the CMC. The fiber volume ratio is determined by the following formula.

$$\text{Fiber volume ratio } [\%] = (V_f/V_{CMC})\ 100$$

In this formula, $V_f$ is the volume of the ceramic continuous fiber and $V_{CMC}$ is the volume of the CMC. $V_f$ and $V_{CMC}$ are individually determined using the following formulas.

$$V_f = m/\rho_f$$

$$V_{cmc} = A \times B \times C$$

In these formulas, m is the mass [g] of the ceramic continuous fiber, $p_f$ is the density [g/cm$^3$] of the ceramic continuous fiber, A is the length [mm] of the CMC, B is the width [B] of the CMC and C is the thickness [mm] of the CMC.

The tensile strength (hereafter, also referred to as "bulk tensile strength") of the CMC varies depending on the type of the ceramic matrix or the covered ceramic continuous fiber, but is, for example, 130 MPa or more or 145 MPa or more. Specifically, a CMC according to this embodiment formed of an alumina matrix and a covered alumina continuous fiber has a bulk tensile strength of, for example, 150 MPa or more, 200 MPa or more or 220 MPa or more, or 300 MPa or less; a CMC according to this embodiment formed of an alumina matrix and a covered mullite continuous fiber has a bulk tensile strength of, for example, 130 MPa or more or 140 MPa or more, or 200 MPa or less,

The bulk tensile strength can be measured in accordance with a method in JIS R 1656 and the measurement conditions are as follows.
Test speed: 0.5 mm/min
The measurement sample used for the measurement of bulk tensile strength is a plate-shaped CMC having a width of 10 mm, a length of 110 mm and a thickness of 2.5 mm.

[Method for producing cover-layer-including ceramic continuous fiber]

The method for producing a cover-layer-including ceramic continuous fiber according to an embodiment is not limited as long as it provides a cover-layer-including ceramic continuous fiber that satisfies the above-described feature; a preferred production method is a production method including an impregnation step of impregnating a ceramic continuous fiber containing a coupling material at least in the surface with a solution containing a metallic salt and a heat-treatment step of heat-treating the ceramic continuous fiber.

The production method is more preferably, for example, a production method comprising a first immersion step of immersing a ceramic continuous fiber in a solution containing a coupling material, a drying step of drying the ceramic continuous fiber at a temperature of 70°C or more, a second immersion step of immersing the ceramic continuous fiber in a solution containing a metallic salt, a first heat-treatment step of heat-treating the ceramic continuous fiber, a third immersion step of immersing the ceramic continuous fiber in a solution containing a metallic salt, an organic acid and an inorganic acid, a fourth immersion step of immersing the ceramic continuous fiber in water at 50°C to 100°C and a second heat-treatment step of heat-treating the ceramic continuous fiber.

The first immersion step, the drying step, the second impregnation step and the first heat-treatment step are performed, which are features of the cover-layer-including ceramic continuous fiber according to the present invention. These steps are performed, to thereby form a thin film on the surface of the ceramic continuous fiber. In this case, in formation of the cover layer by the liquid-phase method, generation of homogeneous nuclei and growth of nuclei can be promoted. Furthermore, after the first heat-treatment step, the fourth immersion step is performed to thereby provide a cover-layer-including ceramic continuous fiber in which the variation coefficient is decreased and the coverage is increased.

In the first impregnation step, the ceramic continuous fiber is immersed in a solution containing a coupling material (hereafter, also referred to as "coupling solution"). As a result, chemical adsorption of the coupling material onto the surface of the ceramic continuous fiber is promoted, to provide a coupling-material-modified ceramic continuous fiber.

The coupling material used in the first impregnation step is preferably at least one of a phosphonic acid derivative or an alkoxysilane derivative, more preferably a phosphonic acid derivative. Preferred examples of the coupling material include phosphonic acid derivatives such as aminomethylphosphonic acid ($H_2NCH_2PO(OH)_2$), 2-aminoethylphosphonic acid ($H_2NCH_2CH_2PO(OH)_2$), 3-aminopropylphosphonic acid ($H_2NCH_2CH_2CH_2PO(OH)_2$), N-(phosphonomethyl)glycine ($HOOCCH_2NHCH_2PO(OH)_2$), 4-aminobenzylphosphonic acid, hydroxymethylphosphonic acid ($HOCH_2PO(OH)_2$), 2-hydroxyethylphosphonic acid ($HOCH_2CH_2PO(OH)_2$) and phosphonoacetic acid ($HOCOCH_2PO(OH)_2$) and alkoxysilane derivatives such as 3-methacryloxypropylmethyldimethoxysilane ($H_2CCCH_3COOC_3H_6SiCH_3(OCH_3)_2$), N-2-(aminoethyl)-3-aminopropylmethyldimethoxysilane ($H_2NC_2H_4NHC_3H_6SiCH_3(OCH_3)_2$), N-2-(aminoethyl)-3-aminopropyltrimethoxysilane ($H_2NC_2H_4NHC_3H_6Si(OCH_3)_3$), 3-aminopropyltrimethoxysilane ($H_2NC_3H_6Si(OCH_3)_3$) and 3-aminopropyltriethoxysilane ($H_2NC_3H_6Si(OCH_2CH_3)_3$). The coupling material is more preferably one or more phosphonic acid derivatives selected from the group consisting of aminomethylphosphonic acid, 2-aminoethylphosphonic acid, 3-aminopropylphosphonic acid, N-(phosphonomethyl)glycine, 4-aminobenzylphosphonic acid, hydroxymethylphosphonic acid, 2-hydroxyethylphosphonic acid and phosphonoacetic acid, still more preferably selected from the group consisting of aminomethylphosphonic acid, N-(phosphonomethyl)glycine and phosphonoacetic acid, particularly preferably phosphonoacetic acid.

In the coupling solution, the solvent is not particularly limited as long as it is a solvent in which the coupling material dissolves. Preferred examples of the solvent include alcohols such as methanol, ethanol and propanol and organic solvents such as acetone, tetrahydrofuran and benzene. The solvent is more preferably an alcohol or ethanol.

The coupling solution, which contains a coupling material, preferably does not contain metallic ions.

The immersion conditions in the first impregnation step are conditions under which a coupling reaction to the surface of the ceramic continuous fiber, for example, a coupling reaction of phosphonoacetic acid, proceeds. For example, an immersion condition is an impregnation temperature that is the boiling point or less of the solvent or room temperature (20 to 30°C). The impregnation time is, for example, 30 minutes to 7 days or 12 hours or more and 36 hours or less.

In the drying step, the coupling material having adsorbed onto the surface is caused to react with the surface hydroxy groups of the ceramic continuous fiber, to achieve stabilization of the coupling material on the surface of the ceramic continuous fiber, to provide a coupling-material-stabilized ceramic continuous fiber.

The temperature of the drying step is 50°C or more, preferably 70°C or more, more preferably 60°C to 180°C, still more preferably 70°C to 150°C, yet more preferably 70°C to 100°C. The drying atmosphere is not limited and may be, for example, an oxidizing atmosphere or the air atmosphere. The drying time varies depending on the drying temperature, but is 1 hour or more and 24 hours or less, for example.

In the second immersion step, the coupling-material-stabilized ceramic continuous fiber is immersed in a solution containing a metallic salt (hereafter, also referred to as "metallic solution"). In the second immersion step, the coupling material is chelated with metallic ions derived from the metallic salt, to provide a ceramic continuous fiber including, in the surface, the coupling material to which the metallic ions are coordinated, a metal-coordinated ceramic continuous fiber.

The metallic salt contained in the metallic solution used in the second immersion step is a salt containing one or more selected from the group consisting of lanthanum (La), cerium (Ce), neodymium (Nd), samarium (Sm), europium (Eu), gadolinium (Gd), erbium (Er), ytterbium (Yb), yttrium (Y) and aluminum (Al), preferably a salt containing one or more selected from the group consisting of lanthanum, cerium, neodymium, gadolinium, samarium and yttrium, more preferably a salt containing lanthanum. The salt may be one or more selected from the group consisting of chloride, nitrate, sulfate and carbonate, is preferably at least one of chloride or nitrate, more preferably nitrate. The metallic salt is particularly preferably a nitrate containing one or more selected from the group consisting of lanthanum (La), cerium (Ce), neodymium (Nd), samarium (Sm), europium (Eu), gadolinium (Gd), erbium (Er), ytterbium (Yb), yttrium (Y) and aluminum (Al). Specifically, preferred examples of the metallic salt include (1) hydrochlorides such as lanthanum chloride ($LaCl_3$), cerium chloride ($CeCl_3$), neodymium chloride ($NdCl_3$), samarium chloride ($SmCl_3$), europium chloride ($EuCl_3$), gadolinium chloride ($GdCl_3$), erbium chloride ($ErCl_3$), ytterbium chloride ($YbCl_3$), yttrium chloride ($YCl_3$) and aluminum chloride ($AlCl_3$), (2) nitrates such as lanthanum nitrate ($La(NO_3)_3$), cerium nitrate ($Ce(NO_3)_3$), neodymium nitrate ($Nd(NO_3)_3$), samarium nitrate ($Sm(NO_3)_3$), europium nitrate ($Eu(NO_3)_3$), gadolinium nitrate ($Gd(NO_3)_3$), erbium nitrate ($Er(NO_3)_3$), ytterbium nitrate ($Yb(NO_3)_3$), yttrium nitrate ($Y(NO_3)_3$) and aluminum nitrate ($Al(NO_3)_3$), (3) sulfates such as lanthanum sulfate ($La_2(SO_4)_3$), cerium sulfate ($Ce_2(SO_4)_3$), neodymium sulfate ($Nd_2(SO_4)_3$), samarium sulfate ($Sm_2(SO_4)_3$), europium sulfate ($Eu_2(SO_4)_3$), gadolinium sulfate ($Gd_3(SO_4)_3$), erbium sulfate ($Er_2(SO_4)_3$), ytterbium sulfate ($Yb_2(SO_4)_3$), yttrium sulfate ($Y_2(SO_4)_3$) and aluminum sulfate ($Al_2(SO_4)_3$) and carbonates such as lanthanum carbonate ($La_2(CO_3)_3$), cerium carbonate ($Ce_2(CO_3)_3$), neodymium carbonate ($Nd_2(CO_3)_3$), samarium carbonate ($Sm_2(CO3)_3$), europium carbonate ($Eu_3(CO3)_3$), gadolinium carbonate ($Gd_2(CO_3)_3$), erbium carbonate ($Er_2(CO_3)_3$), ytterbium carbonate ($Yb_2(CO_3)_3$), yttrium carbonate ($Y_2(CO_3)_3$) and aluminum carbonate ($Al_2(CO_3)_3$). The metallic salt is more preferably a nitrate, still more preferably one or more selected from the group consisting of lanthanum nitrate, cerium nitrate, neodymium nitrate, samarium nitrate, gadolinium nitrate, ytterbium nitrate, yttrium nitrate and aluminum nitrate, still more preferably one or more selected from the group consisting of lanthanum nitrate, cerium nitrate, neodymium nitrate, gadolinium nitrate, samarium nitrate and yttrium nitrate, particularly preferably lanthanum nitrate.

The solvent in the metallic solution is not particularly limited as long as the metallic salt dissolves therein. Preferred examples of the solvent include alcohols such as methanol, ethanol and propanol and organic solvents (organic solvents) such as acetone, tetrahydrofuran and benzene. The solvent is more preferably an alcohol or ethanol.

The second immersion step is performed under conditions under which a metallic cation coordination reaction to the coupling material, preferably phosphonoacetic acid, proceeds. A condition in the second immersion step is, for example, an immersion temperature that is a temperature of the boiling point or less of the solvent, preferably the temperature of the boiling point of the solvent, 80°C or more or 100°C or more, and 200°C or less or 150°C or less. The immersion time is, for example, 30 minutes to 24 hours, or 30 minutes to 5 hours. In order to promote the coordination reaction, the immersion is preferably performed under heating at a temperature at or near the boiling point of the solvent.

In the first heat-treatment step, from the metal-coordinated ceramic continuous fiber, organic components derived from the coupling material and the metallic salt are removed. This results in formation of a uniform coating film of the metallic salt on the surface of the ceramic continuous fiber, to provide a metal-coating ceramic continuous fiber. Such a coating-film-including ceramic continuous fiber is used as a precursor and immersed in a cover solution (described later), which inferentially results in formation of a cover layer in which the thickness variation coefficient of the cover layer is low. Specifically, in the first heat-treatment step, the metal-coordinated ceramic continuous fiber obtained after the second immersion step is heat-treated, so that the coupling material chemically adsorbed to the ceramic continuous fiber is decomposed and the residual organic components are removed. As a result, on the surface of the ceramic continuous fiber, a coating film of the inorganic acid salt is formed. In the metal-coating ceramic continuous fiber, the coating film formed of the inorganic acid salt has a thickness of 20 to 40 nm.

In the first heat-treatment step, the heat-treatment conditions are not particularly limited; the heat-treatment temperature is preferably 500°C to 1200°C, more preferably 700°C to 1000°C. The heat-treatment atmosphere is preferably an oxidizing atmosphere, more preferably the air atmosphere. The heat-treatment time is not limited and is, for example, 30 minutes or more and 24 hours or less, or 1 hour or more and 5 hours or less. After such a step, the fourth immersion step is performed, to thereby provide a cover-layer-including ceramic continuous fiber in which the variation coefficient is decreased and the coverage is increased.

In the third immersion step, immersion in a solution containing a metallic salt, an organic acid and an inorganic acid (hereafter, also referred to as "cover solution") is performed. Specifically, in the third immersion step, a ceramic continuous fiber including, in the surface, a coating film of an inorganic acid salt, a metal-coating ceramic continuous fiber, is impregnated with a solution containing a metallic salt, an organic acid and an inorganic acid.

In the cover solution used in the third immersion step, the metallic salt is preferably the same metallic salt as the metallic salt used in the second immersion step, is a salt containing one or more selected from the group consisting of lanthanum, cerium, neodymium, samarium, europium, gadolinium, erbium, ytterbium, yttrium and aluminum, preferably a salt containing one or more selected from the group consisting of lanthanum, cerium, neodymium, gadolinium, samarium and yttrium, more preferably a salt containing lanthanum. The salt may be one or more selected from the group consisting of chloride, nitrate, sulfate and carbonate, is preferably at least one of chloride or nitrate, more preferably nitrate. Examples of the metallic salt include (1) hydrochlorides such as lanthanum chloride, cerium chloride, neodymium chloride, samarium chloride, europium chloride, gadolinium chloride, erbium chloride, ytterbium chloride, yttrium chloride and aluminum chloride, (2) nitrates such as lanthanum nitrate, cerium nitrate, neodymium nitrate, samarium nitrate, europium nitrate, gadolinium nitrate, erbium nitrate, ytterbium nitrate, yttrium nitrate and aluminum nitrate, (3) sulfates such as lanthanum sulfate, cerium sulfate, neodymium sulfate, samarium sulfate, europium sulfate, gadolinium sulfate, erbium sulfate, ytterbium sulfate, yttrium sulfate and aluminum sulfate and carbonates such as lanthanum carbonate, cerium carbonate, neodymium carbonate, samarium carbonate, europium carbonate, gadolinium carbonate, erbium carbonate, ytterbium carbonate, yttrium carbonate and aluminum carbonate. The metallic salt is more preferably a nitrate, still more preferably one or more selected from the group consisting of lanthanum nitrate, cerium nitrate, neodymium nitrate, samarium nitrate, gadolinium nitrate, ytterbium nitrate, yttrium nitrate and aluminum nitrate, particularly preferably lanthanum nitrate.

In the third immersion step, the organic acid is an organic acid that improves the dispersibility of the metallic salt and is preferably, for example, one or more selected from the group consisting of citric acid, lactic acid, glycolic acid, serine and threonine, preferably citric acid.

In the third immersion step, the inorganic acid is preferably at least one of phosphoric acid or silicic acid, preferably phosphoric acid.

In the third immersion step, the solvent of the cover solution is not limited, but is preferably a protic solvent, preferably, for example, at least one of water or ethanol, more preferably water.

In the third immersion step, the metal-coating ceramic continuous fiber is immersed under conditions under which the metallic salt, the organic acid and the inorganic acid adhere to the surface of the fiber. For example, the immersion conditions are an immersion temperature of the boiling point or less of the solvent and an immersion time of 1 minute to 24 hours, 1 minute or more and 1 hour or less or 3 minutes or more and 30 minutes or less.

In the fourth immersion step, the metal-coating ceramic continuous fiber having been immersed in the cover solution is immersed in water at 50°C to 100°C. In the fourth immersion step, the immersion temperature is a temperature at which the metallic ions derived from the metallic salt react with the inorganic acid and is 50°C to 100°C.

The fourth immersion step is performed under conditions under which generation of nuclei of the inorganic salt and growth of the nuclei on the surface of the metal-coating ceramic continuous fiber occur; for example, the immersion temperature is the boiling point or less of the solvent or 30°C to 80°C or the impregnation time is 1 minute to 7 days or 2 minutes to 30 minutes.

In the second heat-treatment step, a cover layer is formed on the surface of the metal-coating ceramic continuous fiber surface, to thereby provide the covered ceramic continuous fiber according to this embodiment. In the second heat-treatment step, the temperature is preferably 500°C to 1200°C, more preferably 700°C to 1000°C. At less than 500°C, an excess of the organic acid and the inorganic acid tend to remain within the cover layer and tend to cause deterioration of the fiber. At more than 1200°C, deterioration of the fiber due to heat tends to proceed. The heat-treatment atmosphere is an oxidizing atmosphere or the air atmosphere. The heat-treatment time is appropriately adjusted in accordance with the heat-treatment temperature and is, for example, 1 hour or more and 10 hours or less or 1 hour or more and 5 hours or less.

[Method for producing ceramic matrix composite material (CMC)]

The method for producing a ceramic matrix composite material according to an embodiment of the present invention is, for example, a production method comprising a combination step of combining the above-described cover-layer-including ceramic continuous fiber and a ceramic matrix.

The method of achieving combination is not limited, but is preferably, for example, a method in which a ceramic continuous fiber (the cover-layer-including ceramic continuous fiber according to this embodiment) is immersed in a slurry containing raw materials for the ceramic matrix (hereafter, also referred to as "raw-material slurry") and subsequently impregnated with a precursor and the resultant is heat-treated, or a method for producing a CMC including a shaping step of mixing together the raw-material slurry and the cover-layer-including ceramic continuous fiber according to this embodiment and subsequently shaping the mixture to provide a green body and a firing step of firing the green body.

The raw-material slurry contains raw materials for the ceramic matrix and is preferably a slurry containing a ceramic powder dispersed in a solvent. The ceramic powder may be a powder containing at least one selected from the group consisting of alumina, mullite, silica and zirconia, a powder containing at least one of alumina or mullite, or a powder containing alumina.

The solvent of the raw-material slurry is a solvent in which the ceramic powder is dispersed, such as water or alcohol, preferably water.

The ceramic continuous fiber, which is the cover-layer-including ceramic continuous fiber according to this embodiment, is, for example, at least one of a cover-layer-including alumina continuous fiber or a cover-layer-including mullite continuous fiber.

The method of mixing together the raw-material slurry and the cover-layer-including ceramic continuous fiber according to this embodiment is not limited and may be impregnating the cover-layer-including ceramic continuous fiber according to this embodiment with the raw-material slurry. The impregnation conditions are not limited and the entirety of the cover-layer-including ceramic continuous fiber is immersed in the raw-material slurry.

The raw-material slurry and the cover-layer-including ceramic continuous fiber according to this embodiment are mixed together and subsequently the resultant mixture is shaped. The shaping is performed by a method of turning the mixture into a predetermined shape; for example, the mixture is heated in the air, in the air, at a temperature of 25°C to 160°C, preferably 80°C to 140°C. This provides a green body.

The obtained green body is fired to thereby provide the CMC according to this embodiment. For the firing conditions, the green body may be fired in an oxidizing atmosphere, preferably the air atmosphere, at 1050°C to 1300°C or 1050°C to 1200°C.

The method for producing a CMC according to this embodiment may include the following steps performed prior to the firing: a calcination step of calcining the green body to provide a calcined body and a heat-treatment step of immersing the calcined body in the precursor and subsequently heat-treating the calcined body.

In the calcination step, the green body is calcined to provide a calcined body. The calcination conditions are conditions under which sintering of the ceramic matrix proceeds, for example, in the air at 600°C to 1000°C, preferably at 800°C to 1000°C.

As a result of the heat-treatment step, the resultant CMC is further densified. In the heat-treatment step, the calcined body is immersed in the precursor. The precursor is a compound that densifies the ceramic matrix due to a heat-treatment or the precursor of the ceramic matrix. For example, the precursor of alumina is one or more selected from the group consisting of polyaluminum chloride, aluminum hydroxide and aluminum nitrate or polyaluminum chloride.

The immersion is performed using a solution containing the precursor, preferably an aqueous solution containing the precursor, and the calcined body. The immersion conditions are conditions under which pores of the calcined body are impregnated with the aqueous solution, for example, in a reduced-pressure atmosphere, preferably in a vacuum atmosphere, more preferably in a vacuum atmosphere at -0.08 PaG or less at room temperature for 1 minute or more and 1 hour or less.

The calcined body having been immersed in the precursor is heat-treated. The heat-treatment conditions are not limited and are, for example, an oxidizing atmosphere, preferably the air atmosphere, at 600°C to 1000°C, preferably 800°C to 1000°C. The heat-treatment time is not limited and is, for example, 30 minutes or more and 5 hours or less.

The heat-treatment step may be repeated; the heat-treatment step may be performed one time to ten times or one time to five times.

When the method for producing the CMC according to this embodiment includes the calcination step and the heat-treatment step, instead of the green body, the calcined body having been subjected to the heat-treatment step may be fired.

EXAMPLES

Hereinafter, the present invention will be described with reference to Examples. However, the present invention is not limited to these Examples.

(Coverage)

The coverage was calculated, using a surface SEM image of a covered ceramic continuous fiber, by the following Formula (1).

$$\theta = 100 \times S/Sf \qquad (1)$$

[$\theta$ is coverage (%), Sf is the measured area (m$^2$) of the surface of the ceramic continuous fiber and S is the area (m$^2$) of the cover layer within the measured area determined by binarization]

The surface SEM image was obtained by observing, using a SEM (name of apparatus: JSM-7600F, manufactured by JEOL Ltd.), the surface of the covered ceramic continuous fiber under the following conditions.

Accelerating voltage: 5 kV
Observation magnification: 5000x

The obtained surface SEM image was subjected to image analysis using an image analysis software (name of software: ImageJ, manufactured by The National Institutes of Health), to determine Sf and S.

(Thickness of cover layer and thickness variation coefficient of cover layer)

The thickness of the cover layer and the thickness variation coefficient of the cover layer were measured using a cross-sectional SEM image of the covered ceramic continuous fiber.
SEM observation was performed under the same conditions as in (Coverage) except that a cross-section (in the fiber longitudinal direction) of the covered ceramic continuous fiber embedded in resin was observed, to obtain a cross-sectional SEM image.
For the thickness of the cover layer, in a ceramic continuous fiber the whole circumference of which was observed in the cross-sectional SEM image, measurement points were set at 8 to 16 points that were equally apart from each other on the circumference of the continuous fiber and the thicknesses [nm] of the cover layer at the measurement points were measured. As the measurement points, 50 to 60 points were set. For the thickness (t) of the cover layer at each of the measurement points, an image analysis software (name of software: ImageJ, manufactured by The National Institutes of Health) was used.
The determined thicknesses were averaged to determine the thickness ($t_{ave}$) of the cover layer in this embodiment.
Furthermore, the thickness variation coefficient of the cover layer was calculated, using the thicknesses of the cover layer in the cross-sectional SEM image measured by the above-described method, by Formula (2).

$$CV = 100 \times \sigma/t_{ave} \qquad (2)$$

In Formula (2), CV is the thickness variation coefficient [%] and $\sigma$ is the standard deviation [nm] of the thicknesses of the cover layer, the standard deviation being determined from the thicknesses (t) of the cover layer at all the measurement points. $t_{ave}$ is the thickness of the cover layer and is the average [nm] of the thicknesses (t) of the cover layer at all the measurement points.

<Production of cover-layer-including ceramic continuous fiber>

Example A1

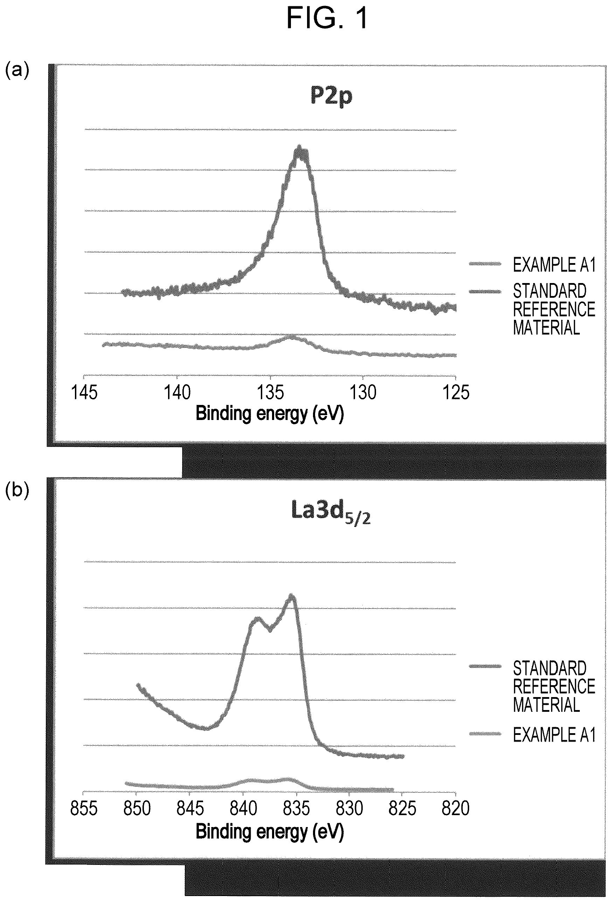

200 mg of phosphonoacetic acid ($HOCOCH_2PO(OH)_2$) was dissolved in 250 mL of ethanol to prepare an impregnation solution (coupling solution; phosphonoacetic acid-ethanol solution). A mullite continuous fiber (mullite continuous fiber cloth, trade name: Nextel 720, manufactured by 3M Japan Limited) having been desized (heat-treated) at 800°C in the air was placed into (immersed in) the impregnation solution. This was left at rest at room temperature for 24 hours to impregnate the mullite continuous fiber with phosphonoacetic acid (first immersion step). Subsequently, the mullite continuous fiber was taken out from the impregnation solution and dried in the air at 70°C (drying step) .
Such treatments were performed to thereby provide a phosphonoacetic-acid-covered mullite continuous fiber (phosphonoacetic-acid-covered mullite continuous fiber cloth).
400 mg of lanthanum nitrate ($La(NO_3)_3 \cdot 6H_2O$) was dissolved in 200 mL of ethanol to prepare an impregnation solution (metallic solution; lanthanum nitrate-ethanol solution). The obtained phosphonoacetic-acid-covered mullite continuous fiber was placed into (immersed in) the impregnation solution (lanthanum nitrate-ethanol solution) and heated at 120°C for 1 hour (second immersion step). Subsequently, the mullite continuous fiber was taken out from the impregnation solution and washed with an ethanol solution. After the washing, heating at standard pressure in the air (specifically, a treatment in the air at 900°C for 2 hours) was performed (first heat-treatment step).
These steps provided a mullite continuous fiber including, in the surface, a $LaPO_4$ thin film. Fig. 1 illustrates the ESCA measurement results of the obtained mullite continuous fiber including the $LaPO_4$ thin film and a standard reference material. Note that the standard reference material is provided by heating lanthanum phosphate n-hydrate (manufactured by STREM Chemicals, Inc.) in the air at 900°C for 2 hours and is monoclinic-system monazite-type lanthanum phosphate ($LaPO_4$). The obtained mullite continuous fiber including the $LaPO_4$ thin film and the standard reference material were the same in terms of the binding energies of lanthanum (La) and phosphorus (P). This demonstrated that the surface of the mullite continuous fiber including the $LaPO_4$ thin film was covered with a thin film formed of $LaPO_4$.

Subsequently, in an impregnation aqueous solution (cover solution; aqueous lanthanum nitrate solution) provided by dissolving 80 g of citric acid, 8 g of phosphoric acid and 40 g of lanthanum nitrate ($La(NO_3)_3 \cdot 6H_2O$) in 100 mL of water, the $LaPO_4$-covered mullite continuous fiber was immersed at room temperature for 5 minutes (third immersion step). After the immersion, the $LaPO_4$-covered mullite continuous fiber was taken out from the impregnation aqueous solution and placed into (impregnated with) heated water (hot water at 55 ± 5°C) for 5 minutes (fourth immersion step). Subsequently, from the hot water, the mullite continuous fiber was taken out and washed with a sufficient amount of water (pure water). After the washing, the $LaPO_4$-covered mullite continuous fiber having been subjected to the fourth immersion step was heated in the air at 900°C for 2 hours (second heat-treatment step).

This provided a mullite continuous fiber covered with about 60 nm monazite-type lanthanum phosphate ($LaPO_4$) (specifically, a mullite continuous fiber including, in the surface, a cover layer having a thickness of 60 nm and formed of $LaPO_4$), which was defined as the lanthanum-phosphate-covered mullite continuous fiber of this Example.

As illustrated in Fig. 2, it was demonstrated that the lanthanum-phosphate-covered mullite continuous fiber of this Example included, on the surface of the mullite continuous fiber, a cover layer formed of $LaPO_4$. In addition, the lanthanum phosphate cover layer was found to have a thickness variation coefficient of 14% and the cover layer was found to have a thickness (average film thickness) of 63 nm.

As illustrated in Fig. 3, in the surface, in addition to the spectra of Al, Si and O derived from the mullite continuous fiber, the spectra of P and La were detected. This demonstrated that the surface of the mullite continuous fiber was covered with monazite-type lanthanum phosphate ($LaPO_4$) and the coverage was found to be 100%.

Example A2

The same method as in Example A1 was performed except that the steps after the third immersion step in Example A1 (specifically the fourth immersion step and the second heat-treatment step) were repeated five times, to thereby provide a monazite-type lanthanum-phosphate ($LaPO_4$)-covered mullite continuous fiber, which was defined as the lanthanum-phosphate-covered mullite continuous fiber of this Example.

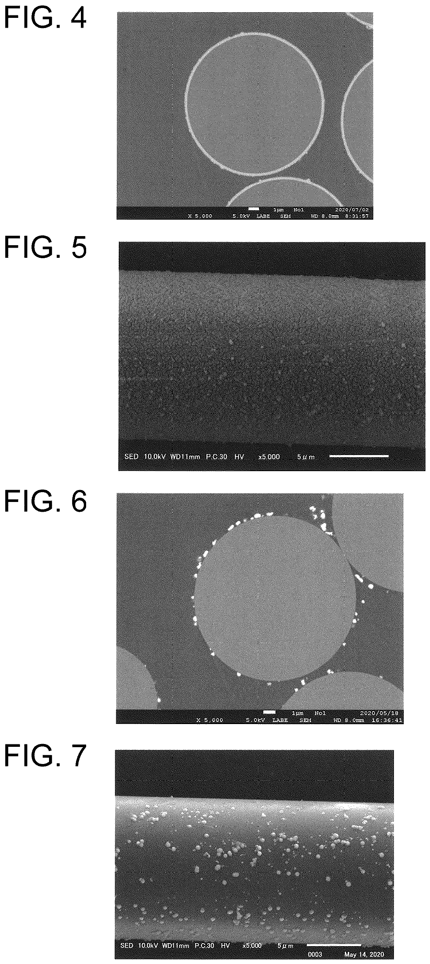

It was demonstrated that, in the lanthanum-phosphate-covered mullite continuous fiber of this Example, the surface of the mullite continuous fiber was covered with lanthanum phosphate and the mullite continuous fiber included a cover layer formed of lanthanum phosphate; and the coverage was found to be 100%. The thickness variation coefficient of the cover layer was found to be 23% and the thickness of the cover layer (average film thickness) was found to be 350 nm. For the lanthanum-phosphate-covered mullite continuous fiber of this Example, a cross-sectional SEM image is illustrated in Fig. 4 and a surface SEM image is illustrated in Fig. 5.

Example A3

The same method as in Example A1 was performed except that the lanthanum nitrate in the metallic solution and the cover solution was changed to cerium nitrate and the mullite continuous fiber was changed to an alumina continuous fiber (trade name: Nextel 610, alumina continuous fiber cloth, manufactured by 3M Japan Limited), to thereby provide a monazite-type cerium-phosphate ($CePO_4$)-covered alumina continuous fiber, which was defined as the cerium-phosphate-covered alumina continuous fiber of this Example.

A surface SEM image demonstrated that, in the cerium-phosphate-covered alumina continuous fiber of this Example, the surface of the alumina continuous fiber was covered with cerium phosphate and the alumina continuous fiber included a cover layer formed of cerium phosphate; and the coverage was found to be 100%. The cover layer was found to have a thickness variation coefficient of 14% and the cover layer was found to have a thickness of 152 nm.

Example A4

The same method as in Example A3 was performed except that the cerium nitrate in the metallic solution and the cover solution was changed to neodymium nitrate, to thereby provide a monazite-type neodymium-phosphate ($NdPO_4$)-covered alumina continuous fiber, which was defined as the neodymium-phosphate-covered alumina continuous fiber of this Example.

A surface SEM image demonstrated that, in the neodymium-phosphate-covered alumina continuous fiber of this Example, the surface of the alumina continuous fiber was covered with neodymium phosphate and the alumina continuous fiber included a cover layer formed of neodymium phosphate; the coverage was found to be 100%; in addition, the cover layer was found to have a thickness variation coefficient of 10% and the cover layer was found to have a thickness of 265 nm.

Example A5

The same method as in Example A1 was performed except that the lanthanum nitrate in the metallic solution and the cover solution was changed to gadolinium nitrate, to thereby provide a monazite-type gadolinium-phosphate ($GdPO_4$)-covered mullite continuous fiber, which was defined as the neodymium-phosphate-covered mullite continuous fiber of this Example.

A surface SEM image demonstrated that, in the neodymium-phosphate-covered mullite continuous fiber of this Example, the surface of the mullite continuous fiber was covered with gadolinium phosphate and the mullite continuous fiber included a cover layer formed of gadolinium phosphate; and the coverage was found to be 100%. In addition, the cover layer was found to have a variation coefficient of 26% and the cover layer was found to have a thickness of 157 nm.

Example A6

The same method as in Example A1 was performed except that the lanthanum nitrate in the metallic solution and the cover solution was changed to samarium nitrate, to thereby provide a monazite-type samarium-phosphate ($SmPO_4$)-covered mullite continuous fiber, which was defined as the samarium-phosphate-covered mullite continuous fiber of this Example.

A surface SEM image demonstrated that, in the samarium-phosphate-covered mullite continuous fiber of this Example, the surface of the mullite continuous fiber was covered with samarium phosphate and the mullite continuous fiber included a cover layer formed of samarium phosphate; and the coverage was found to be 100%. In addition, the cover layer was found to have a thickness variation coefficient of 42% and the cover layer was found to have a thickness of 174 nm.

Example A7

The same method as in Example A3 was performed except that the cerium nitrate in the metallic solution and the cover solution was changed to samarium nitrate, to thereby provide a monazite-type samarium-phosphate ($SmPO_4$)-covered alumina continuous fiber, which was defined as the samarium-phosphate-covered mullite continuous fiber of this Example.

A surface SEM image demonstrated that, in the samarium-phosphate-covered mullite continuous fiber of this Example, the surface of the alumina continuous fiber was covered with samarium phosphate and the alumina continuous fiber included a cover layer formed of samarium phosphate; and the coverage was found to be 100%. In addition, the cover layer was found to have a thickness variation coefficient of 25% and the cover layer was found to have a thickness of 198 nm.

Example A8

The same method as in Example A1 was performed except that the lanthanum nitrate in the metallic solution and the cover solution was changed to yttrium nitrate, to thereby provide a xenotime-type yttrium-phosphate ($YPO_4$)-covered mullite continuous fiber, which was defined as the yttrium-phosphate-covered mullite continuous fiber of this Example.

A surface SEM image demonstrated that, in the yttrium-phosphate-covered mullite continuous fiber of this Example, the surface of the mullite continuous fiber was covered with yttrium phosphate and the continuous fiber was a mullite continuous fiber including a cover layer formed of yttrium phosphate; the coverage was found to be 100%; in addition, the cover layer was found to have a thickness variation coefficient of 19% and the cover layer was found to have a thickness of 81 nm.

Comparative Example A1

The same method as in Example A1 was performed except that the steps from the first immersion step to the first heat-treatment step were not performed (specifically, the mullite continuous fiber was subjected to the third immersion step, the fourth immersion step and the second heat-treatment step), to thereby provide a monazite-type lanthanum-phosphate ($LaPO_4$)-covered mullite continuous fiber, which was defined as the lanthanum-phosphate-covered mullite continuous fiber of this Comparative Example.

A surface SEM image demonstrated that, in the lanthanum-phosphate-covered mullite continuous fiber of this Comparative Example, the surface of the mullite continuous fiber was covered with lanthanum phosphate and the coverage was found to be 28%. In addition, the cover layer was found to have a thickness variation coefficient of 125%, which was higher than that of Example A1. Furthermore, the cover layer was found to have a thickness (average film thickness) of 139 nm.

For the lanthanum-phosphate-covered mullite continuous fiber of this Comparative Example, a cross-sectional SEM image is illustrated in Fig. 6 and the surface SEM image is illustrated in Fig. 7.

It was demonstrated that, compared with Example A1, this Comparative Example had a much lower coverage and had the cover layer having a larger thickness, so that the cover layer was present non-uniformly (for example, in a sea-island pattern) over the surface of the mullite continuous fiber.

Comparative Example A2

The same method as in Example A1 was performed except that the first immersion step to the first heat-treatment step were not performed and the third immersion step and subsequent steps (specifically, the third immersion step to the second heat-treatment step) were repeated five times, to thereby provide a monazite-type lanthanum-phosphate ($LaPO_4$)-covered mullite continuous fiber, which was defined as the lanthanum-phosphate-covered mullite continuous fiber of this Comparative Example.

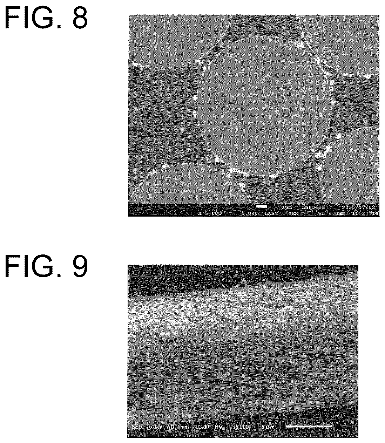

A surface SEM image demonstrated that, for the lanthanum-phosphate-covered mullite continuous fiber of this Comparative Example, the surface of the mullite continuous fiber was covered with monazite-type lanthanum phosphate ($LaPO_4$) and the coverage was found to be 100%. In addition, the variation coefficient was found to be 94%, which is higher than that of Example A2. Furthermore, the cover layer was found to have a thickness (average film thickness) of 172 nm. For the lanthanum-phosphate-covered mullite continuous fiber of this Comparative Example, a cross-sectional SEM image is illustrated in Fig. 8 and the surface SEM image is illustrated in Fig. 9.

This Example has a higher coverage than Comparative Example A1. However, it was demonstrated that, compared with Example A2, the cover layer had a thickness variation coefficient of more than 90% and the cover layer having variations in the thickness was present over the surface of the mullite continuous fiber.

Comparative Example A3

The same method as in Example A1 was performed except that the alumina continuous fiber was subjected to the third immersion step, the fourth immersion step and the second heat-treatment step, the lanthanum nitrate was replaced by samarium nitrate and the mullite continuous fiber was replaced by the alumina continuous fiber, to thereby provide a monazite-type samarium-phosphate ($SmPO_4$)-covered alumina continuous fiber, which was defined as the samarium-phosphate-covered alumina continuous fiber of this Comparative Example.

A surface SEM image demonstrated that, for the samarium-phosphate-covered alumina continuous fiber of this Comparative Example, the surface of the alumina continuous fiber was covered with samarium phosphate and the coverage was found to be 7%. In addition, the cover layer was found to have a thickness variation coefficient of 133% and the cover layer was found to have a thickness of 117 nm.

The thickness of the cover layer of this Comparative Example was similar to that of Example A7; in spite of that, the thickness variation coefficient was considerably high.

<Production of CMC>

Example B1

An alumina powder having an average particle size of 0.2 um and having a substantially spherical shape was employed as the raw material powder. 90 g of the raw material powder and 30 g of pure water were mixed together in a ball mill, to provide an alumina slurry.

Subsequently, the lanthanum-phosphate-covered mullite continuous fiber of Example A1 was impregnated with the alumina slurry. Subsequently, this was heated at a temperature of 120°C for 4 hours. This provided a green body of 130 mm, 110 mm in length and about 2.5 mm in thickness. The green body was heat-treated in the air at 900°C for 2 hours; subsequently, the green body was impregnated with an aqueous solution of polyaluminum chloride serving as the precursor ($[Al_2(OH)_nCl_{6-n}]_m$, $n \approx 5$, $m \leq 10$, $Al_2O_3$ concentration: 20 wt%) (manufactured by TAIMEI CHEMICALS CO., LTD., ALFINE 83) in a vacuum (0.01 MPa) at room temperature for 1 minute. After the impregnation, a heat-treatment was performed in the air at 900°C for 2 hours. The impregnation and the heat-treatment were repeated three times and subsequently a heat-treatment was performed in the air at 1100°C for 2 hours, to provide a CMC of this Example (CMC constituted by an alumina matrix and the lanthanum-phosphate-covered mullite continuous fiber).

(Measurement of density of CMC)

The CMC of this Example was processed into a test specimen of 10 mm in width, 110 mm in length and 2.5 mm in thickness. The obtained test specimen was used to determine the density by the Archimedes' method. The density was found to be 2.80 g/cm$^3$. In addition, the fiber volume ratio was found to be 38.5%.

(Measurement of bulk tensile strength)

Aluminum tabs were attached to both ends of the obtained test specimen to prepare a tensile test specimen. The width and the thickness of the tensile test specimen were measured using a micrometer and the length of the test specimen was measured using vernier calipers. A strength tester (manufactured by SHIMADZU CORPORATION, name of apparatus: AG-XPlus) and a tensile test jig were used to perform a tensile strength test at a loading speed of 0.5 mm/min. The bulk tensile strength of the obtained CMC was found to be 168 MPa.

Example B2

The same method as in Example B1 was performed except that the cerium-phosphate-covered alumina continuous fiber of Example A3 was used to thereby provide the CMC of this Example (CMC constituted by an alumina matrix and the cerium-phosphate-covered alumina continuous fiber). For the CMC of this Example, the density was found to be 2.95 g/cm$^3$, the fiber volume ratio was found to be 35.0% and the bulk tensile strength was found to be 228 MPa.

Example B3

The same method as in Example B1 was performed except that the neodymium-phosphate-covered alumina continuous fiber of Example A4 was used, to thereby provide the CMC of this Example (CMC constituted by an alumina matrix and the neodymium-phosphate-covered alumina continuous fiber). For the CMC of this Example, the density was found to be 3.00 g/cm$^3$, the fiber volume ratio was found to be 37.0% and the bulk tensile strength was found to be 250 MPa.

Example B4

The same method as in Example B1 was performed except that the gadolinium-phosphate-covered mullite continuous fiber of Example A5 was used, to thereby provide a CMC of this Example (CMC constituted by an alumina matrix and the gadolinium-phosphate-covered mullite continuous fiber). For the CMC of this Example, the density was found to be 2.77 g/cm$^3$, the fiber volume ratio was found to be 37.5% and the bulk tensile strength was found to be 132 MPa.

Example B5

The same method as in Example B1 was performed except that the samarium-phosphate-covered mullite continuous fiber of Example A6 was used, to thereby provide the CMC of this Example (CMC constituted by an alumina matrix and samarium-phosphate-covered mullite continuous fiber). For the CMC of this Example, the density was found to be 2.80 g/cm$^3$, the fiber volume ratio was found to be 41.0% and the bulk tensile strength was found to be 149 MPa.

Example B6

The same method as in Example B1 was performed except that the samarium-phosphate-covered alumina continuous fiber of Example A7 was used, to thereby provide a CMC of this Example (CMC constituted by an alumina matrix and the samarium-phosphate-covered alumina continuous fiber). For the CMC of this Example, the density was found to be 2.95 g/cm$^3$, the fiber volume ratio was found to be 34.4% and the bulk tensile strength was found to be 226 MPa.

Example B7

The same method as in Example B1 was performed except that the yttrium-phosphate-covered mullite continuous fiber of Example A8 was used, to thereby provide the CMC of this Example (CMC constituted by an alumina matrix and a yttrium-phosphate-covered mullite continuous fiber). For the CMC of this Example, the density was found to be 2.82 g/cm$^3$, the fiber volume ratio was found to be 35.5% and the bulk tensile strength was found to be 138 MPa.

Comparative Example B1

The same method as in Example B1 was performed except that a mullite continuous fiber having been desized (heat-treated in the air at 800°C) (mullite continuous fiber cloth, manufactured by 3M Japan Limited, trade name: Nextel 720) was used (specifically, a mullite continuous fiber not covered with monazite-type lanthanum phosphate (LaPO$_4$)

was used), to thereby provide the CMC of this Comparative Example. For the CMC of this Comparative Example, the bulk tensile strength was found to be 79 MPa, which was a lower strength than that of the CMC of Example B1.

Comparative Example B2

The same method as in Example B1 was performed except that the lanthanum-phosphate ($LaPO_4$)-covered mullite continuous fiber of Comparative Example A1 was used, to thereby provide the CMC of this Comparative Example (CMC constituted by an alumina matrix and the lanthanum-phosphate-covered mullite continuous fiber). For the CMC of this Comparative Example, the density was found to be 2.82 $g/cm^3$, the fiber volume ratio was found to be 42.4% and the bulk tensile strength was found to be 120 MPa.

Comparative Example B3

The same method as in Example B1 was performed except that the samarium-phosphate-covered alumina continuous fiber of Comparative Example A3 was used, to thereby provide the CMC of this Comparative Example (CMC constituted by an alumina matrix and the samarium-phosphate-covered alumina continuous fiber). For the CMC of this Comparative Example, the density was found to be 3.05 $g/cm^3$, the fiber volume ratio was found to be 38.3% and the bulk tensile strength was found to be 135 MPa.

As have been described, the following was demonstrated: in comparison between the CMC of Example B1 including the cover-layer-including ceramic continuous fiber (specifically, the CMC constituted by the mullite continuous fiber including the monazite-type lanthanum phosphate cover layer and the alumina matrix) and the CMC of Comparative Example B1 including the ceramic continuous fiber not including cover layers in the surface (specifically, the CMC constituted by the mullite continuous fiber not including cover layers and the alumina matrix), the CMC of Example B1 has higher strength (specifically, has higher bulk tensile strength). These results demonstrated that cover-layer-including ceramic continuous fibers according to the present invention are suitable for producing high-strength ceramic matrix composite materials.

Industrial Applicability

Cover-layer-including ceramic continuous fibers according to the present invention have smooth surfaces of cover layers due to the absence of aggregation of inorganic acid salts in covering of the surfaces of ceramic continuous fibers and hence can be used as CMCs having high damage tolerance such as tensile strength. In addition, the small number of steps provide high coverage, which enables production at low costs. Cover-layer-including ceramic continuous fibers according to the present invention can be produced by impregnating ceramic continuous fibers with solvents containing metallic nitrates, so that the covering treatment can be easily performed for two-dimensional cloth-shaped woven fabrics and even three-dimensional woven-fabric or nonwoven-fabric complex structures and can be industrially and widely used.

The entire contents of Description, Claims, Drawings and Abstract of JP2020-158278 filed in the Japan Patent Office on September 23, 2020 are incorporated herein by reference as disclosure of Description of the present disclosure.

**Claims**

1.  A cover-layer-including ceramic continuous fiber comprising a ceramic continuous fiber and a cover layer formed of an inorganic acid salt and disposed on a surface of the ceramic continuous fiber, wherein the cover layer has a thickness variation coefficient of 80% or less.

2.  The cover-layer-including ceramic continuous fiber according to claim 1, wherein the cover layer formed of the inorganic acid salt provides a coverage of 90% or more.

3.  The cover-layer-including ceramic continuous fiber according to claim 1 or 2, wherein the cover layer has a thickness of more than 50 nm.

4.  The cover-layer-including ceramic continuous fiber according to any one of claims 1 to 3, wherein, on the surface of the ceramic continuous fiber, the cover layer formed of the inorganic acid salt and having a thickness of 1 um or less is disposed.

5.  The cover-layer-including ceramic continuous fiber according to any one of claims 1 to 4, wherein the inorganic acid salt is a phosphate.

6. The cover-layer-including ceramic continuous fiber according to any one of claims 1 to 5, wherein the inorganic acid salt is one or more selected from the group consisting of lanthanum phosphate, cerium phosphate, neodymium phosphate and samarium phosphate.

7. The cover-layer-including ceramic continuous fiber according to any one of claims 1 to 6, wherein the inorganic acid salt is lanthanum phosphate.

8. The cover-layer-including ceramic continuous fiber according to any one of claims 1 to 7, wherein the ceramic continuous fiber is at least one of a mullite continuous fiber or an alumina continuous fiber.

9. A ceramic matrix composite material comprising the cover-layer-including ceramic continuous fiber according to any one of claims 1 to 8.

10. A method for producing a cover-layer-including ceramic continuous fiber, the method being a production method for the cover-layer-including ceramic continuous fiber according to any one of claims 1 to 8, the production method comprising a first immersion step of immersing a ceramic continuous fiber in a solution containing a coupling material, a drying step of drying the ceramic continuous fiber at a temperature of 70°C or more, a second immersion step of immersing the ceramic continuous fiber in a solution containing a metallic salt, a first heat-treatment step of heat-treating the ceramic continuous fiber, a third immersion step of immersing the ceramic continuous fiber in a solution containing a metallic salt, an organic acid and an inorganic acid, a fourth immersion step of immersing the ceramic continuous fiber in water at 50°C to 100°C and a second heat-treatment step of heat-treating the ceramic continuous fiber.

11. The method for producing a cover-layer-including ceramic continuous fiber according to claim 10, wherein the coupling material is at least one of a phosphonic acid derivative or an alkoxysilane derivative.

12. The method for producing a cover-layer-including ceramic continuous fiber according to claim 10 or 11, wherein the metallic salt in the second immersion step is a nitrate containing one or more selected from the group consisting of lanthanum (La), cerium (Ce), neodymium (Nd), samarium (Sm), europium (Eu), gadolinium (Gd), erbium (Er), ytterbium (Yb), yttrium (Y) and aluminum (Al).

13. The method for producing a cover-layer-including ceramic continuous fiber according to any one of claims 10 to 12, wherein, in the third immersion step, the metallic salt in the solution containing the metallic salt, the organic acid and the inorganic acid is a metallic salt that is the same as the metallic salt used in the second immersion step.

14. A method for producing a ceramic matrix composite material, the method comprising a combination step of combining the cover-layer-including ceramic continuous fiber according to any one of claims 1 to 8 and a ceramic matrix.

# FIG. 1

(a)

(b)

FIG. 2

# FIG. 3

(a)

(b)

(c)

(d)

(e)

FIG. 4

FIG. 5

FIG. 6

FIG. 7

FIG. 8

FIG. 9

## INTERNATIONAL SEARCH REPORT

| | International application No. |
| --- | --- |
| | **PCT/JP2021/034194** |

| **A.** | **CLASSIFICATION OF SUBJECT MATTER** |
| --- | --- |

*C04B 35/80*(2006.01)i; *D06M 11/45*(2006.01)i
FI:   C04B35/80 300; D06M11/45

According to International Patent Classification (IPC) or to both national classification and IPC

| **B.** | **FIELDS SEARCHED** |
| --- | --- |

Minimum documentation searched (classification system followed by classification symbols)

C04B35/80; D06M11/45

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | JP 2002-173376 A (MITSUI KOZAN MATERIAL KK) 21 June 2002 (2002-06-21) paragraphs [0001], [0009]-[0012], [0033], [0034], [0062]-[0065] | 1-9, 14 |
| A | | 10-13 |
| Y | JP 2016-156109 A (TOKYO INST. OF TECHNOLOGY) 01 September 2016 (2016-09-01) paragraphs [0002], [0028], [0033]-[0040] | 1-9, 14 |
| A | | 10-13 |
| Y | CN 105272325 A (AVIC COMPOSITES CO., LTD.) 27 January 2016 (2016-01-27) paragraphs [0024]-[0043] | 1-9, 14 |
| A | | 10-13 |
| A | US 6139916 A (DLR DEUTSCHE ZENTRUM FUR LUFT UND RAUMFAHRT E. V. LINDER HOHE) 31 October 2000 (2000-10-31) whole document, whole drawing | 1-14 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 October 2021** | **02 November 2021** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
**Information on patent family members**

International application No.

**PCT/JP2021/034194**

| Patent document cited in search report | | | Publication date (day/month/year) | Patent family member(s) | Publication date (day/month/year) |
|---|---|---|---|---|---|
| JP | 2002-173376 | A | 21 June 2002 | US 2002/0037802 A1 paragraphs [0002], [0011], [0012], [0059], [0060], [0080]-[0084] EP 1193236 A2 | |
| JP | 2016-156109 | A | 01 September 2016 | (Family: none) | |
| CN | 105272325 | A | 27 January 2016 | (Family: none) | |
| US | 6139916 | A | 31 October 2000 | EP 890559 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020158278 A

**Non-patent literature cited in the description**

- *J. AerospaceLab,* 2011, (3), 1-12
- *J. Am. Ceram. Soc.,* 1997, vol. 80 (12), 2987-96
- *J. Am. Ceram. Soc.,* 2001, vol. 84 (12), 2783-92
- *Materials Science and Engineering,* 1998, vol. A244, 91-96